# EUROPEAN PATENT APPLICATION

(11) **EP 3 974 406 A1**
(43) Date of publication of application: **30.03.2022**
(21) Application number: 19929670.8
(22) Date of filing: 22.05.2019
(51) Int. Cl.: C06B 47/00, C06B 47/14

(54) **SMART ANTI-EXPLOSIVE MATERIAL**

(71) Applicant: SMART MISR FOR INNOVATION, Giza (EG)
(72) Inventor: MOSTAFA, Mohsen, Hassan, Morsy, Giza (EG); TAMAN, Mohamed, Ahmed, Elhady, Giza (EG); ALI, Alaa, Mohamed, Hasaneen, Ismailia (EG); ALI, Awad, Mohaned, Hasaneen, Ismailia (EG)
(74) Representative: J A Kemp LLP
(86) International application number: PCT/EG2019/000015
(87) International publication number: WO 2020/233766

(57) **Abstract**

The invention relates to a material with high anti-explosivity and vaporization reduction, which is an alloy of aluminum, nano activated carbon or nano graphene and a plurality of other metal elements in the form of an engineered mesh (cylindrical forms - inner jacket) that represents 2% of the internal volume of the content of oil, its derivatives and gas. The material has high absorptivity and high absorptivity, suppresses the movement of gas particles and fumes, improves the flash point by 35%, the ignition temperature by 40% and reduces evaporation by 70%, thereby preventing the explosion of oil, its derivatives and gas upon exposure (fire, collision, static electricity, high heat, being struck by a projectile). Separately, the polymer sodium polyacrylate is added to crude oil to improve its properties and protect it from explosion.

## Description

### Technical field:

Smart anti-explosive material for petroleum derivatives

### Prior Art:

- There are many common fire-retardant materials that are generally used in fire extinguishing, for example, water, FOAM, dry chemicals, dry powder, carbon dioxide, and halons. However, these materials do not prevent the evaporation and explosion of crude oil or its derivatives, as they only resist and extinguish fires.
- There is also found in the invention of US20150151630A1, dated 03-12- 2013, titled, explosion and ballistic resistant fuel tanks utilizing molded polymer inner liners, composite fabrics and self-sealing materials.
- There is also found in the invention of CN102344025B, dated 05-08-2010, titled, anticorrosive flame retardant explosion-proof material. The invention relates to manufacturing and filling explosion-proof fillers made, in different proportions, from a number of alloys of Iron, Copper, Magnesium, Titanium, Zinc, Chromium, Manganese, Aluminum, Silicon, Nickel and Zirconium, formed in the form of a honeycomb-like porous structure.
- In the processes of crude oil's processing, producing and refining, crude oil is subjected to many complex methods of processing to separate it from water, impurities and salts. The most important method thereof is using hydrophobic demulsifiers, which has many problems, on of which is high cost, wasting time and evaporation of a portion of the petroleum.

### Problems and shortage in the prior art:

- The defect and problems in the common fire- retardant materials are that they are not prevent vaporization and explosion of petroleum and gas derivatives, but only resist and extinguish the fires, which results in huge economic and human losses as well as loss of huge quantities of petroleum and gas derivatives.
- One of the defects and problems is the lack of safety and security when the containers of crude oil derivatives or gas are exposed to fire, handling, transportation, storage, maintenance, collision, or lightning.
- One of the defects and problems in the invention of US20150151630A1, is that there is a difficulty in the application, in addition to the fact that the method of manufacturing the tank structure is complicated, limited in use, and expensive, as it is used in the manufacture and design of new tanks only with a non-metallic inner liner that is fuel tanks molded from Aramid fibers, polyethylene fibers, quartz fibers, ceramic fibers, polybenzoxazole fibers, boron fibers, basalt fibers, and three-dimensional additives. This design for fuel tanks is of limited use, except in some military matters, as it is designed to resist ballistic missiles.
- One of the defects and problems in the invention of CN102344025B, is that corrosion- and flame-resistant materials containing rare and precious metals are used, which leads to difficulty in manufacture and application. In addition, it contains some elements with a high density, which occupy a large space of the inner volume of the tank.
- One of the defects and problems is that the impossibility of performing procedures and carrying out maintenance and welding works in cisterns and tanks that are filled with petroleum and derivatives thereof, as well as when they are empty, as it may expose petroleum and derivatives thereof to self-ignition.
- One of the defects and problems in refining crude oil is that very large quantities of chemicals are used for treating the emulsions, called hydrophobic demulsifiers, flaws thereof are:
   1- Consuming large amounts of demulsifiers
   2- Loss of large quantities of light portions of petroleum and gas
   3- Necessity of using a large number of tanks
   4- Contamination of consumed industrial water with sulfa salts
   5- High cost
   6- Environmental pollution due to their waste
   7- The difficulty to obtain petroleum products conforming to the international standards.

### Detailed Description

### The novelty in the invention's subject

❖ After research and study on nano-activated carbon, and nano-graphene, the following has been found:
1- The nano- activated carbon has an absorption and adsorption phenomenon depends, to a great extent, on the surface area and the size of the pores. The porous structure determines the size of the particles that can be absorbed, and the surface areas determine the amount of the material that can be adsorbed, assuming that the molecular size is appropriate. The specific surface area ranges from 300 - 2500 m 2 / g. The amount of the substance absorbed by the activated carbon is surprisingly large, as it often ranges from a quarter to its entire weight of vapors and gases. In addition, nano-activated carbon is widely used to control vapors and gases. Accordingly, it was added to the main aluminum alloy of the smart anti-explosive material, because of its unique properties in the absorption and adsorption of gases and vapors.
2- Nano-graphene substance is characterized by unique and superior chemical and physical properties of absorption and adsorption, large surface area, and reasonable price. Accordingly, it is added to the main aluminum alloy of the smart anti-explosive material.
3- The super absorbent polymer (Sodium polyacrylate) absorbs 250-300 times its volume of water (according to the theories of hydraulics and fluids, the evaporation degree of one liter of water increases 1700 times its volume when exposed to fire, which leads to an explosion of the content of crude oil). Therefore, it was used in the extraction, refining and production of crude oil for disposal of the amount of water mixed with crude oil when extracting it. Thus, sodium polyacrylate has a superior capacity to improve the properties of crude oil by 99%, as it removes water in crude oil, making it less than 0.01 to 0.02%. Thus, crude oil becomes highly efficient which is demanded in global markets. In addition to securing petroleum installations from the risks of explosion.

Properties thereof makes international oil companies avoid using huge quantities of expensive chemicals that help removing some quantities of water mixed with crude oil (emulsion) as well as avoid environmental pollution.

Therefore, the nano-activated carbon, or nano-graphene adding structural rigidity, flexibility in forming and application, and low density and the lowest affected elements by weather factors, shocks, vibrations, moisture and chemical reactions. And also, the super absorbent polymer (sodium polyacrylate), which absorbs as its volume from 250: 300 times of water, therefore, it is considered a novel and innovative addition to the prior art, on the basis of improving the form, content and performance in preventing evaporation and explosion with high efficiency compared to the prior art, and adding many applications in many other fields. Which result in avoiding the defect in the following:
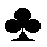 Carbon and graphene, each separately, are mixed with aluminum in specific proportions of 1.5: 2%, as needed, and used in petroleum liquids and gas.
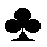 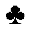 When either carbon or graphene is added to the main material, it makes it easy to form a six-dimensional mesh geometrical shape, and it causes heat distraction of 65% according to laboratory tests.
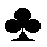 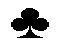 The smart anti-explosive material characterized by being easy to apply without the design, of the containers, tanks or cisterns, of crude oil derivatives or gas, being touched neither internally nor externally.
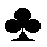 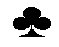 The smart anti-explosive material also reduces the evaporation rate from 60:70%, according to the laboratory tests of the Faculty of Science, Physics Department, Suez Canal University.
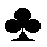 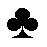 **Assays conducted by National Institute of Standards, Ministry of Higher Education &Scientific Research, Egypt:**
   1- Smart anti-explosive material improves flash ratio 35% and ignition 40%, according to laboratory tests.
   2- the volume of the smart anti-explosive material represents (2%) of the content of petroleum derivatives tanks.
   3- Density testing of the smart anti-explosive material demonstrated that it had a low density = 2.48 g/cm³.
      The laboratory and field-testing results of the National Institute of Standards showed a very good explosion-resistant behavior, and it is considered as an anti-explosive material.
   4- The mechanism of action results from absorbing and dissipating heat and the resulting vapor, which leads to preventing explosion and delaying ignition.
   5- The smart anti-explosive material suppresses the speed of movement of gas particles and thus reduces the pressure on the inner wall of the container, which is one of the factors that prevent the explosion.
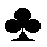 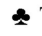 The convenience of maintenance and welding work of tanks and cisterns containing petroleum and its derivatives without emptying them (full or empty) without the slightest risk, as it can be loaded, modified or removed from tanks easily and conveniently, which saves effort, money and time.
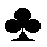 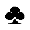 It never reacts with petroleum, derivatives thereof or gas at different temperatures and does not result in any chemical reactions.
   - The components of the material elements and formation thereof prevent the collision of petroleum liquids inside the tanks during their transportation, as they prevent the formation of static electricity charges, which is one of the factors of ignition and explosion.
   - The efficiency of the geometric shapes of the smart anti-explosive material and random distribution thereof in regular structures consistent with the random movement of gas and vapor molecules, suppress the explosion.
   - The ease of applying and securing both new and old tanks and cisterns without any modification.
   - The smart anti-explosive material is also applied in butane gas cylinders, whether for domestic, industrial or any other purposes.
   - The inner jacket made of smart anti-explosive material is applied to new designs and some old designs.
   - Increasing the efficiency of the tires and increasing the life span thereof and the material's high ability in heat dissipation.
   - Manufacture of bobbins used in the textile industry due to disappearing of static electricity.
   - prevention of electromagnetic waves at different microwave frequencies.
   - absorption of electromagnetic waves of military radars.
   - Isolation of electromagnetic waves of mobile devices.
   - Isolation of electromagnetic waves in operating rooms of hospitals, military operations and others.
   - Asphalt mixture industry.
   - The super absorbent polymer (sodium polyacrylate) has unique properties in absorbing water from crude oil helping to prevent explosion upon fire.
   - The super absorbent polymer (sodium polyacrylate) improves the properties of crude oil by improving its purity, of water, by approximately 99.9.
   - The super absorbent polymer (sodium polyacrylate) reduces the use of expensive and huge amounts of emulsifying chemicals.
   - The super absorbent polymer (sodium polyacrylate) is easy to be applied, and it is of low cost compared to alternative materials.
   - The residues resulting from the emulsification of crude oil by sodium polyacrylate are used in fertilizing and cultivating lands and combating desertification, which has great economic benefit.

### Detailed Description:

### 1- The components of the invented material: -

The smart anti-explosive material consists of an Aluminum alloy of purity (99%), nano-activated carbon of ratio 2% or nano-Graphene of ratio 1.5%, high purity Silicon of ratio 2%, Magnesium of ratio 0.5%, and Chromium of ratio 0.25%.

The smart anti-explosive material is formed in the shape of a six-dimensional hollow mesh sheet, thickness thereof is from 0.25 mm to 0.50 mm.

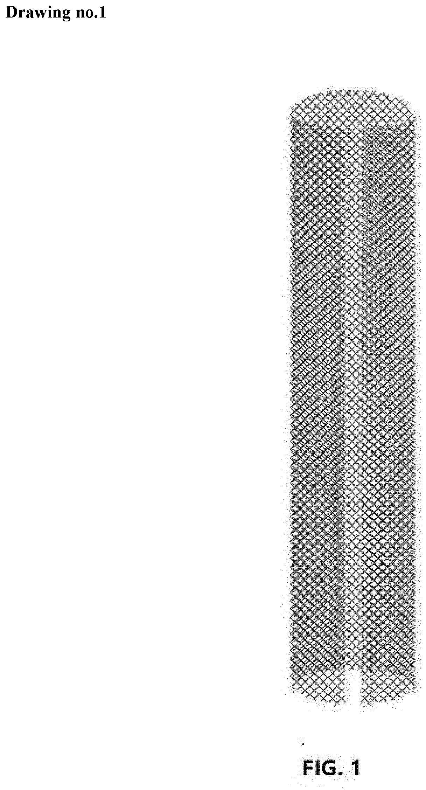

The smart anti-explosive material is formed according to the shape of the container (cisterns and tanks) that contains petroleum, derivatives thereof or gas, wherein the inner walls of the container are lined with the smart anti-explosive material in the shape of an inner shirt the dimensions thereof are calculated according to the measurements. Also, the smart anti-explosive material is placed inside the petroleum content to be protected from explosion in the form of different geometric shapes, one of which is the cylindrical shape, the dimensions of the cylinder are 2 cm to 4 cm in length, the inner diameter is from 0.6 cm to 1 cm, and the hexagonal hole scale for the mesh sheet is from 0.6 mm to 1.5 mm. Dimensions may vary according to the nature of use and application, if necessary. (As shown in drawings, FIG. 1)

The smart anti-explosive material is placed through the nozzle of the tank, pipe or cisterns that contain petroleum materials to be protected from evaporation, explosion and ignition, without the design of the container being touched, neither the internal nor external shape of the cisterns, tanks or gas pipes.

The smart anti-explosive material occupies 2% of the internal volume of petroleum, derivatives thereof or gas.

### 2- The super absorbent polymer (Sodium Polyacrylate) absorbs 250 to 300 times its volume of water.

### ❖ Mechanism of work

### 1- The smart anti-explosive material:

In order for ignition to occur, it is necessary to have an ignition source and a mixture of fuel and air (Oxygen). The explosion occurs as a result of a chemical reaction that is formed as a result of processes in which energy is absorbed, i.e., they are endothermic compounds.

This energy escalates when flammable and interacting materials (petroleum derivatives) are decomposed. If the decomposition process is accompanied by large quantities of gases that expand by heat, resulted from the decomposition, they can perform mechanical work as result of the pressure of the gas formed. If the decomposition is at a speed of more than 300 m/sec, then this process is called combustion, before the internal combustion by machines, and if the decomposition is faster than said rate, it is called an explosion. Petroleum derivatives are considered very highly flammable materials and ignition starters, and they are highly vulnerable to explosion when hit, heated or ignited.

It has been shown through conducting laboratory experiments that the pressure of the gas is directly proportional to its temperature at constant volume. If the temperature increases, the volume is directly proportional to the amount of heat given to the gas. In case of cooling, it is proportional to the decrease in temperature, according to the general gases law. So, the thermal energy that is given to the gas increases the speed of movement of the molecules, and it is clear that the speed of the movement of the molecules determines the degree of force that they collide with the walls of the container of the gas, and accordingly the pressure on the walls of the container increases when the temperature of the gas increases. When adding the smart anti-explosive and anti-evaporative material in its shapes and weights in the tank, for example, that contains crude oil or its derivatives (gasoline, Kerosene, diesel, gas or oil) when exposed to direct or indirect heat resulting from fire, collision, friction resulted from Maintenance practices, or welding. As well as the formation of the smart anti-explosive and anti-evaporative material in the form of geometric or cylindrical shapes or inner shirt is also efficient, when gases are generated due to exposure of the tank containing petroleum materials to direct fire conditions, the gas's molecules move randomly in straight lines, where the gas molecules can be perceived as completely flexible small balls, and the distances between molecules of the gas are relatively large and the cohesion of the gas is very weak, and then, the gases and vapors generated by the effect of heat move randomly and collide with each other and collide with the walls of the inner tank. The collision between the gas molecules and the compound of the smart anti-explosive and anti-evaporative material constitutes an elastic collision, meaning that the kinetic energy of the gas molecules is constant before and after the collision, according to the law that stating that for every action, there is an equal and opposite reaction.

It has been shown through laboratory experiments that the smart anti-explosive and anti-evaporative material is able to absorb and adsorb the resulting gases and also works at the same time to reduce the movement of the molecules of the substance that is directly proportional to the amount of heat given, according to the three laws of gases:
**Boyle's Law :** At constant Temperature, Pressure is inversely proportional to Volume.
**Charles' Law:** At constant Pressure, Volume is directly proportional to Temperature.
**Gav-Lussac's law:** If a gas of fixed mass and fixed volume put in sealed container, the pressure is directly proportional to the gas's absolute temperature.
   - **Experiments:** There are 7 laboratory and field experiments (accredited by the Fire and Explosion Department at the National Institute of standards, Ministry of Scientific Research, Arab Republic of Egypt) were conducted to review the properties of the smart anti-explosive and anti-evaporative material. The experiments were conducted using tanks or tubes containing petroleum liquids (gasoline - kerosene - diesel - butane gas) and added thereto the smart anti-explosive and anti-evaporative material.
   - Field experiments (under the supervision of the Fire and Explosion Department at the National institute of standards, Ministry of Scientific Research, Arab Republic of Egypt) using a domestic butane gas cylinder, tank containing gasoline, and tank containing diesel.

Experiment No. 1
   The fire was lit intensely and continuously for 55 minutes, connected to a butane gas cylinder provided with a cylindrical form of the invented material.
Experiment No. 2
   The fire was lit intensely and continuously for 30 minutes on an open-nozzle gasoline tank provided with a cylindrical form of the invented material.
Experiment No. 3
   The fire was lit intensely and continuously for 30 minutes at an open-nozzle gasoline tank provided with a lining inner shirt of the invented material.
Experiment No. 4
   The fire was lit intensely and continuously for 30 minutes at an open-nozzle diesel tank provided with a cylindrical form of the invented material.
Experiment No. 5
   The fire was lit intensely and continuously for 30 minutes at a sealed-nozzle gasoline tank provided with a cylindrical form of the invented material.
Experiment No. 6
   A fire projectile was fired at a sealed-nozzle gasoline tank provided with a cylindrical form of the invented material.
Experiment No. 7
   Maintenance was carried out by welding two tanks (diesel and gasoline) one of which was provided with a cylindrical shape of the invented material and the other provided with an inner shirt of the invented material, and it is worth noting here that it has never occurred, and it was previously unreasonable in the field of petroleum, to conduct welding works in a tank of petroleum, or trying to change a corroded sheet, for example, without completely emptying the tank or taking it out of service and replacing the petroleum vapors with nitrogen. However, in this experiment none of these safety precautions took place due to the presence of the invented material inside the tank before launching the ejector on it. The welding work is conducted completely safe in the presence a quantity of gasoline (high evaporation) inside the tank, and this is the only time that such welds can be made in a gasoline or petroleum tank without emptying it, knowing that the welding temperature may reach about 3000 degrees Celsius - and this is impossible to occur without the presence of the invented material (the smart anti-explosive material).

### The following results were obtained: -

1- Smart anti-explosive material improves flash ratio 35% and ignition 40%, according to laboratory tests.
2- The laboratory and field-testing results of the National Institute of Standards showed a very good explosion-resistant behavior, and it is considered as an anti-explosive material.
3- The mechanism of action results from absorbing and dissipating heat and the resulting vapor, which leads to preventing explosion and delaying ignition.
4- It suppresses the speed of movement of gas particles and thus reduces the pressure on the inner wall of the container, which is one of the factors that prevent the explosion.
5- The efficiency of the geometrical shapes of the smart anti-explosive material and being distributed randomly in regular structures consistent with the random movement of gas and vapor molecules, hence, suppress evaporating and explosion.

### * The invented smart anti- explosive material is characterized by the following: -

1- It reduces the evaporation rate inside vessels, tanks, cisterns that containing petroleum derivatives up to 70%, which reduces the pressure arising from the vapors of petroleum liquids inside the tanks to the lowest possible value.
2- It maintains the same quantities of petroleum products stored in tanks and cisterns without significant loss due to reducing evaporation.
3- It isolates the absorption of oxygen, thus:
   - It prevents self-ignition.
   - It prevents the explosion of tanks and cisterns that contain petroleum derivatives if they are exposed to fire (fires), friction, high heat or hit by projectiles.
4- This material allows carrying out maintenance work in tanks and cisterns without the slightest risk to the extent that welding work can be carried out for these tanks filled with petroleum liquids without the need to empty them.
5- The smart anti-explosive material never reacts with petroleum derivatives at different temperatures and does not result in any chemical reactions.
6- The method in which the smart anti-explosive material compound is used prevents petroleum liquids from colliding inside the tanks during movement, which provides safety factors during their transportation.

The smart anti-explosive material is considered a revolution in the field of securing petroleum industries, its derivatives and other fields based on them, whether: transportation - storage - handling - maintenance.

### 1- Super absorbent polymer (sodium polyacrylate)

When extracting crude oil, it passes through multiple refineries provided with a material, super absorbent polymer, to extract the excess water, due to the ability thereof to absorb water 300 times its volume 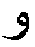 and thus improves the properties of crude oil by 99.9%.

### The super absorbent polymer characterized by the following: -

- It has unique properties in absorbing water from crude oil that helps preventing explosion when burning according to the theories of hydraulics and fluids, where a liter of water when evaporating increases 1700 times its volume and thus leads to the risk of explosion and destruction of the petroleum facility.
- It improves the properties of crude oil by improving its water purity by 99.9%.
- It reduces the use of huge quantities of and expensive chemicals.
- It is easy to apply and inexpensive compared to alternative materials.

### The effect of chemicals on the invented material:

Chemicals of Class (A) have a dangerous (inventive material) effect on these chemicals at normal temperature and in the absence of complicating factors, such as corrosive impurities in these chemicals or the galvanic effect that results from the contact of two similar metal.

Chemicals of class (B), Aluminum should only be used after conducting experiments and validation in these conditions.

Chemicals of class (X) have (the invented material) can be used occasionally unless there are special conditions when using, even in this case, it must be tested. Wherever using aluminum is recommended (A), or permissible (B), the recommendations Definitely refer to concentrated chemicals (100%) unless otherwise stated. And wherever it is recommended not to use (Inventive Material) (X), the recommendations include chemicals at any concentration. (As shown in table no.2 of the Appendix)

### Exploitation way:

1- The smart anti-explosive material is used inside vessels, tanks or cisterns that contains the crude oil or petroleum derivatives (gasoline, Kerosine, diesel, liquified butane gas).
2- The smart anti-explosive material is used in securing (transportation - storage - handling) crude oil and all petroleum derivatives.
3- The smart anti-explosive material is used in conducting maintenance procedures and practices for all the vessels, tanks, or cisterns that contains the crude oil or petroleum derivatives (gasoline, Kerosine, diesel, liquified butane gas). It is used in the industry of all different fuel-powered transportation means, ground, sea or air, such as Motorcycles - all kinds of cars - trains - planes, to be protected against the dangers of explosions.
4- It is used in the means of transporting all kinds of fuel, oils and crude oil, whether land, air, maritime transport and rail.
5- The smart anti-explosive material is used in butane gas cylinders, whether for domestic, industrial or any other purposes.
6- The smart anti-explosive material is used in power plants and generators
7- The smart anti-explosive material is used in fuel tanks at car refueling stations - aircraft - ships.
8- The smart anti-explosive material can be used in rubber tires industry, which leads to raising their efficiency and increasing the life span, as a result of reducing friction and the high ability of cooling.
9- The smart anti-explosive material can be used in manufacture of bobbins used in the textile industry
10- The smart anti-explosive material can be used in manufacture of an electromagnetic wave shield at different microwave frequencies.
11- The smart anti-explosive material can be used in absorption of electromagnetic waves for military radar
12- The smart anti-explosive material can be used as insulator for electromagnetic waves for mobile phones.
13- The smart anti-explosive material can be used as insulator for electromagnetic waves in operating rooms of hospitals, military operations and others.
14- The smart anti-explosive material can be used in Asphalt mixture industry
15- The super absorbent polymer can be used to improve the properties of crude oil and extract the excess water by 99%.
16- The super absorbent polymer can be used in the extraction and production of crude oil, and it absorbs water vapor when exposed to fire, thus preventing explosion.

### BRIEF DESCRIPTION OF THE DRAWINGS

- FIG.1: shows the cylindrical shape of the smart anti-explosive material in the form of a hollow polygonal mesh, dimensions thereof are 2 cm to 4 cm in length, the inner diameter is from 0.6 cm to 1 cm, and the hexagonal hole scale for the mesh sheet is from 0.6 mm to 1.5 mm.

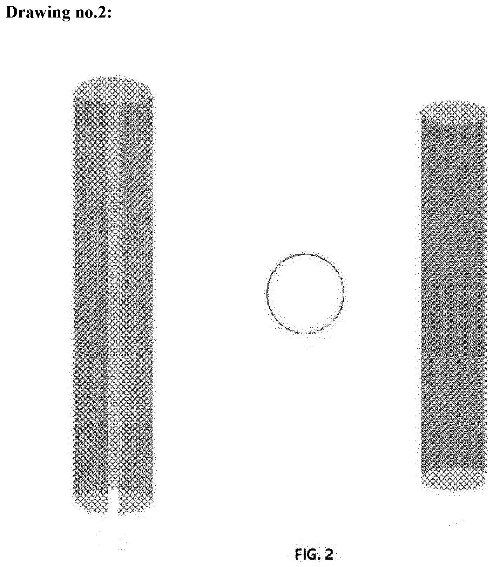

- FIG.2: Shows a horizontal projection of the cylinder (perspective)
- FIG.3: Shows a vertical projection of the cylinder (perspective)
- FIG.4: Shows a lateral projection of the cylinder (perspective).

### Appendix

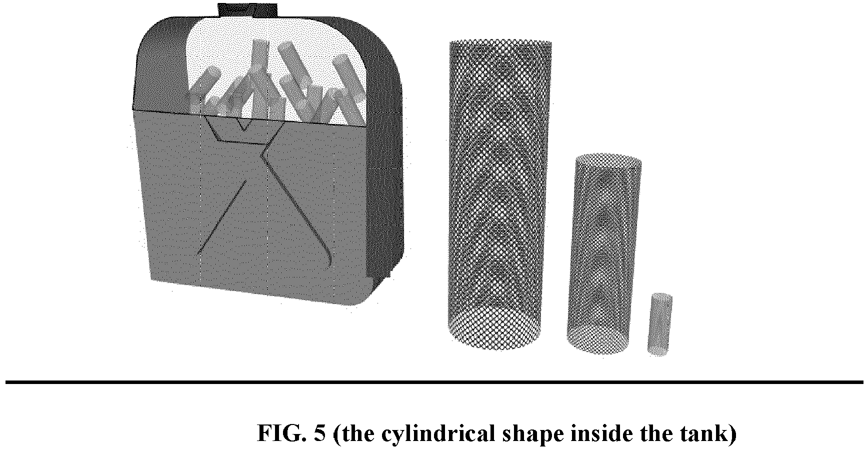

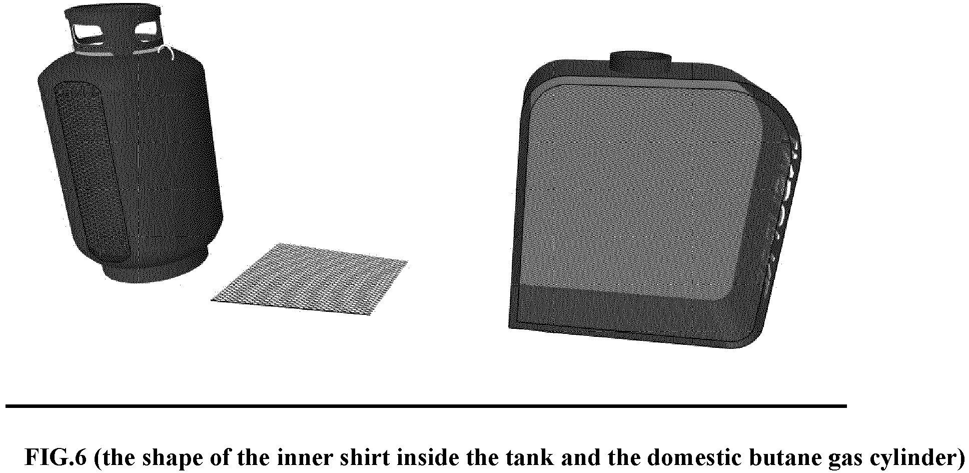

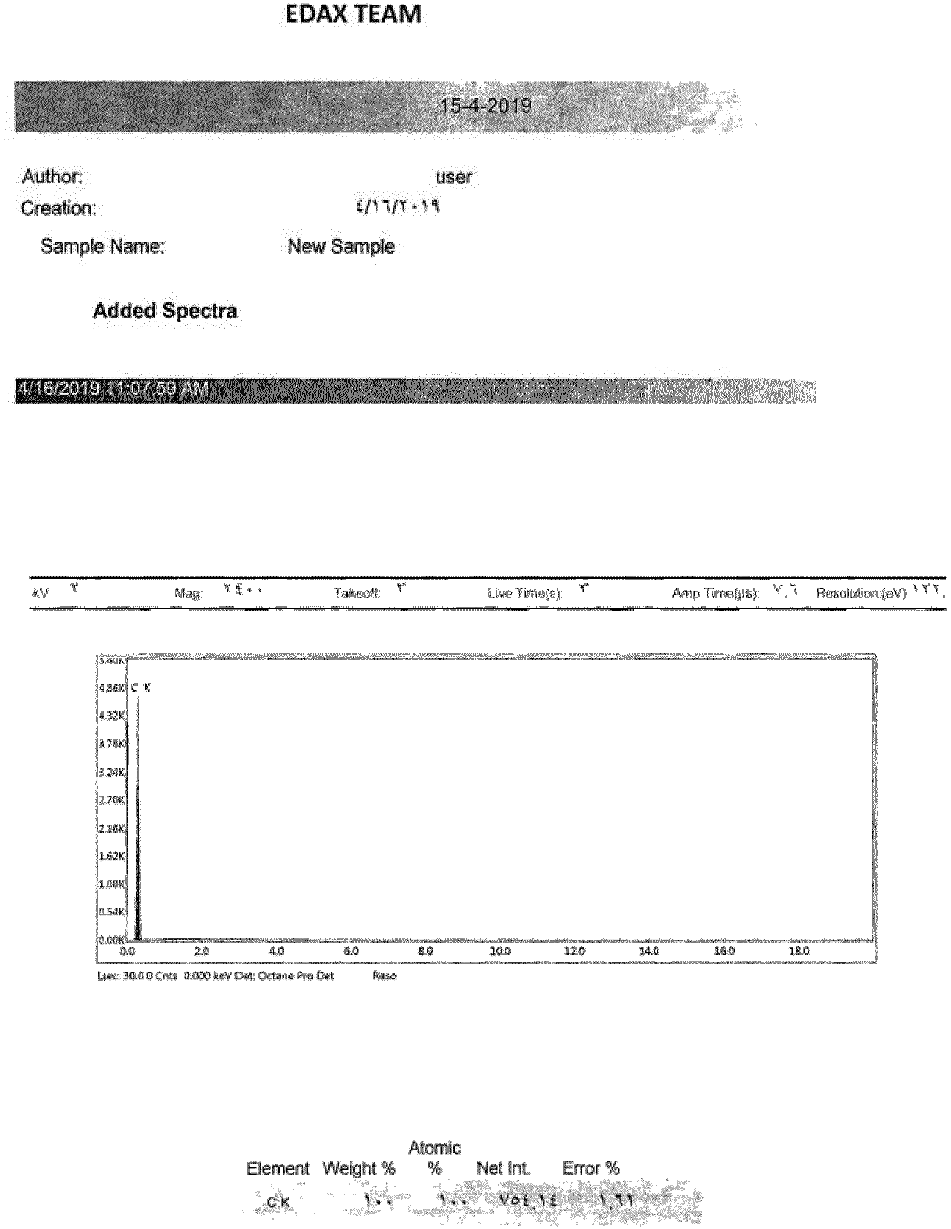

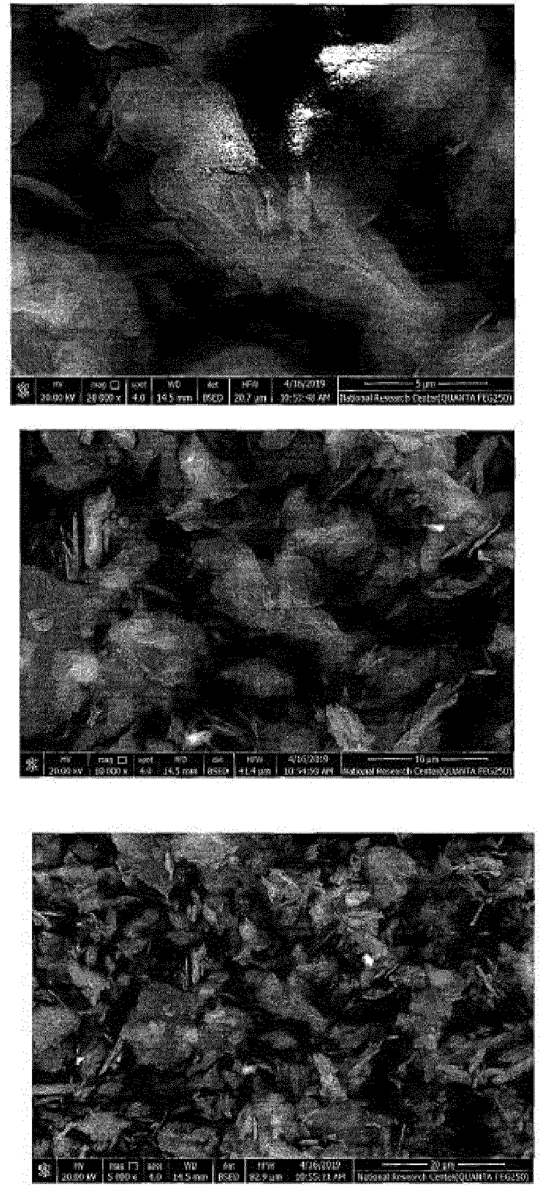

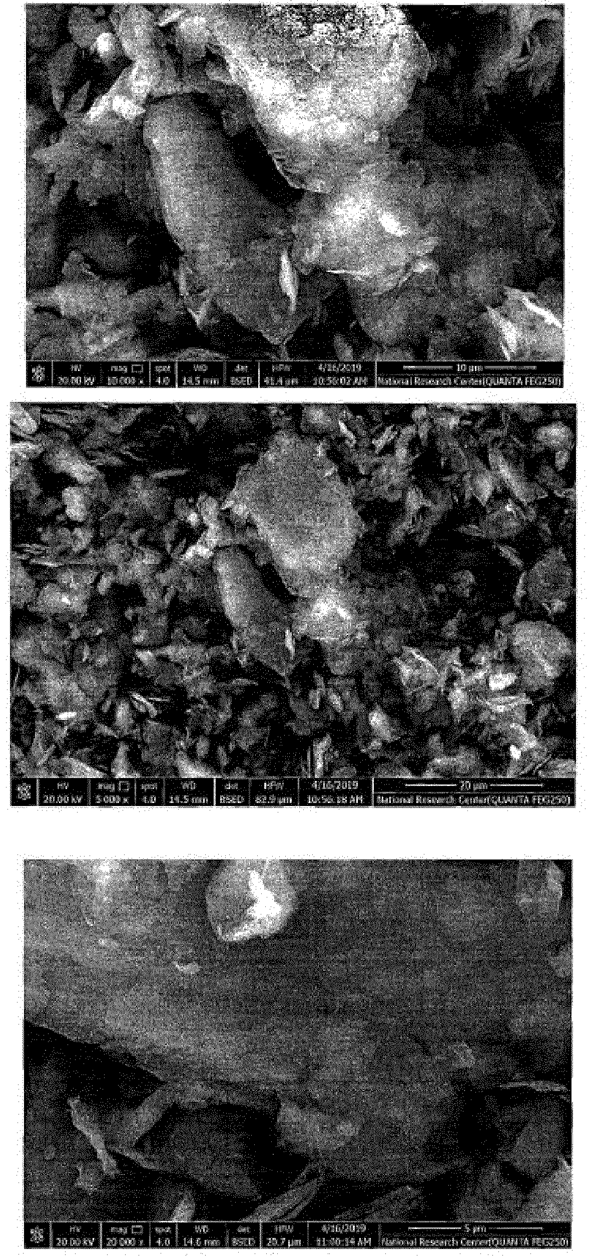

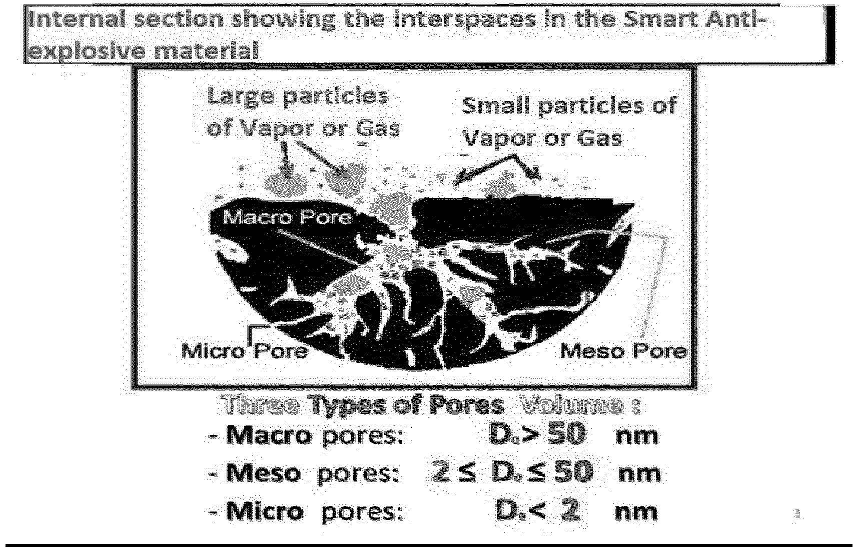

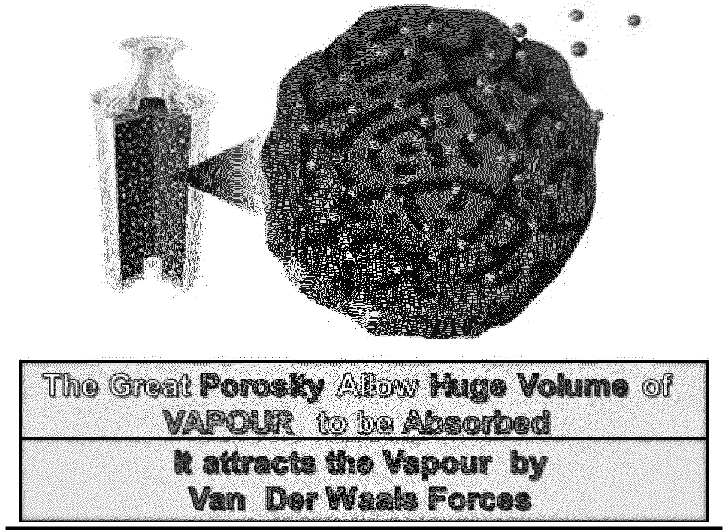

**- Table (1), showing the structure of the material:**

| | Al(%) | **Graphene** (%) | Carbone(%) | Si(%) | Mg (%) | Cr (%) |
|---|---|---|---|---|---|---|
| Intelligent" EXPLOSION " Inhibitor **(Active Carbone NANO)** | 99 | ------- | 2 | 2 | 0.5 | 0.25 |
| Intelligent" EXPLOSION " Inhibitor **(Graphene NANO)** | 99 | 1.5 | ------- | 2 | 0.5 | 0.25 |
| Intelligent" EXPLOSION " Inhibitor (Sodium Polyacrylate) | Add the outer side of the material to the crude oil, depending on the proportion of water in crude oil | | | | | |

**- Table (2), showing the effect of the chemicals on the invented material**

| 1- **Inorganic agents** | | **Classification** | | |
|---|---|---|---|---|
| **Inorganic Acids** | **boric acid solutions 1-5%** | **A** | | |
| | **Chromic acid (pure) in any concentration** | **B** | | |
| | **Hydrochloric acid** | **X** | | |
| | **Hydrofluoric acid 1-60%** | **X** | | |
| | **nitric acid** | **B** | | |
| | **fluoric acid** | **X** | | |
| | **Sulfuric acid** | **B** | | |
| | **Sulfurous acid** | **B** | | |
| **Water** | **water steam 100%** | **A** | | |
| | **water (carbonate)** | **A** | | |
| | **water (chlorine)** | **X** | | |
| | **Distilled water** | **A** | | |
| | **Rainwater** | **A** | | |
| **Different Inorganic agents** | **distilled solutions** | **X** | | |
| | **chlorine** | **X** | | |
| | **hydrogen peroxide 2-30%** | **B** | | |
| | **Sulfide (ferrous) 100%** | **A** | | |
| | **(ferrous) 100%** | **B** | | |
| | **Mercury** | **X** | | |
| | **nitrogen gases 100%** | **B** | | |
| | **Oxygen** | **A** | | |
| | **sulfur** | **A** | | |
| | **sulfur dioxide** | | | |
| **Organic Acids** | **Organic agents** | **Classification** | | |
| | **Acetic acid** | **A** | | |
| | **carbolic acid** | **A** | | |
| | **Fatty acids** | **A** | | |
| | **carbonic acid** | **A** | | |
| | **Fruit acids** | **B** | | |
| | **Organic acids (mostly)** | **B** | | |
| **Alcohols** | **ethylene alcohol** | **B** | | |
| | **Butanol alcohol** | **B** | | |
| | **100% methyl alcohol** | **B** | | |
| **Coal tar and its derivatives** | **Ethylene liquid** | **X** | | |
| | **Anthracilin** | **B** | | |
| | **anthranilic acid** | **X** | | |
| **Organic agents** | | **classification** | | |
| | **Benzene** | **A** | | |
| | **Cresol** | **B** | | |
| | **Naphthalene** | **B** | | |
| | **Phenol (carbolic acid)** | **A** | | |
| | **Toluene** | **A** | | |
| **Lubricants, waxes, and petroleum oils products** | **Asphalt** | **A** | | |
| | **Castor oil** | **A** | | |
| | **Gasoline (unleaded)** | **A** | | |
| | **leaded gasoline** | **B** | | |
| | **Acid free grease** | **A** | | |
| | **Hydraulic Bucket Oil** | **A** | | |
| | **kerosene** | **A** | | |
| | | **Linseed oil** | | A |
| | | **animal oil** | | A |
| | | **mineral oil** | | A |
| | | **Vegetable oil** | | A |
| | | **Petroleum Derivatives** | | A |
| | | **Acid free wax** | | A |
| | | **Acetaldehyde** | | A |
| | | **acetone (any concentration)** | | A |
| | | **Acetylene** | | A |
| | | **camphor** | | A |
| | | **carbon disulfide** | | **A** |
| | | **Carbon Dioxide** | | **A** |
| | | **Carbon Monoxide** | | **A** |
| | | **carbon tetrachloride (dry)** | | **B** |
| **Inorganic agents** | | | | |

| **Aluminum** | **Inorganic agents** | | **Classification** | |
|---|---|---|---|---|
| **Ammonium compounds** | **Ammonia, gas or liquid** | | **A** | |
| | **Ammonium fluoride (any concentration)** | | **B** | |
| | **ammonium hydroxide (nuclear weight 8.8** | | **B** | |
| | **ammonium salts (mostly)** | | B | |
| | ammonium sulfide **(any concentration)** | | A | |
| Metal salts and their hydroxides | **acidic salts** | **B** | | |
| | **Base metal bicarbonate (any concentration)** | **A** | | |
| | **Extras (any concentration)** | **X** | | |
| | **Boroxy solutions 3: 1%** | **X** | | |
| | **bromides** | **B** | | |
| | **chlorides (all)** | **B** | | |
| | **Chromates (mostly) at any concentration** | **X** | | |
| | **Hydroxides (mostly) of any concentration** | **X** | | |
| | **Heavy metals are mostly** | **B** | | |
| | **Iodides** | **X** | | |
| | **mercury salts** | **B** | | |
| | **nitrates** | **A** | | |
| | **Most of the Permanganate** | **X** | | |
| | **Phosphates (mostly)** | **X** | | |
| | **Potassium hydroxide (any concentration)** | **A** | | |
| | **potassium nitride (any concentration)** | **B** | | |
| | **salt (sodium chloride)** | **X** | | |
| | **Sodium hydroxide in any concentration** | **B** | | |
| | **Sodium silicate in any concentration** | **A** | | |
| | **Sulfates in any concentration** | | | |

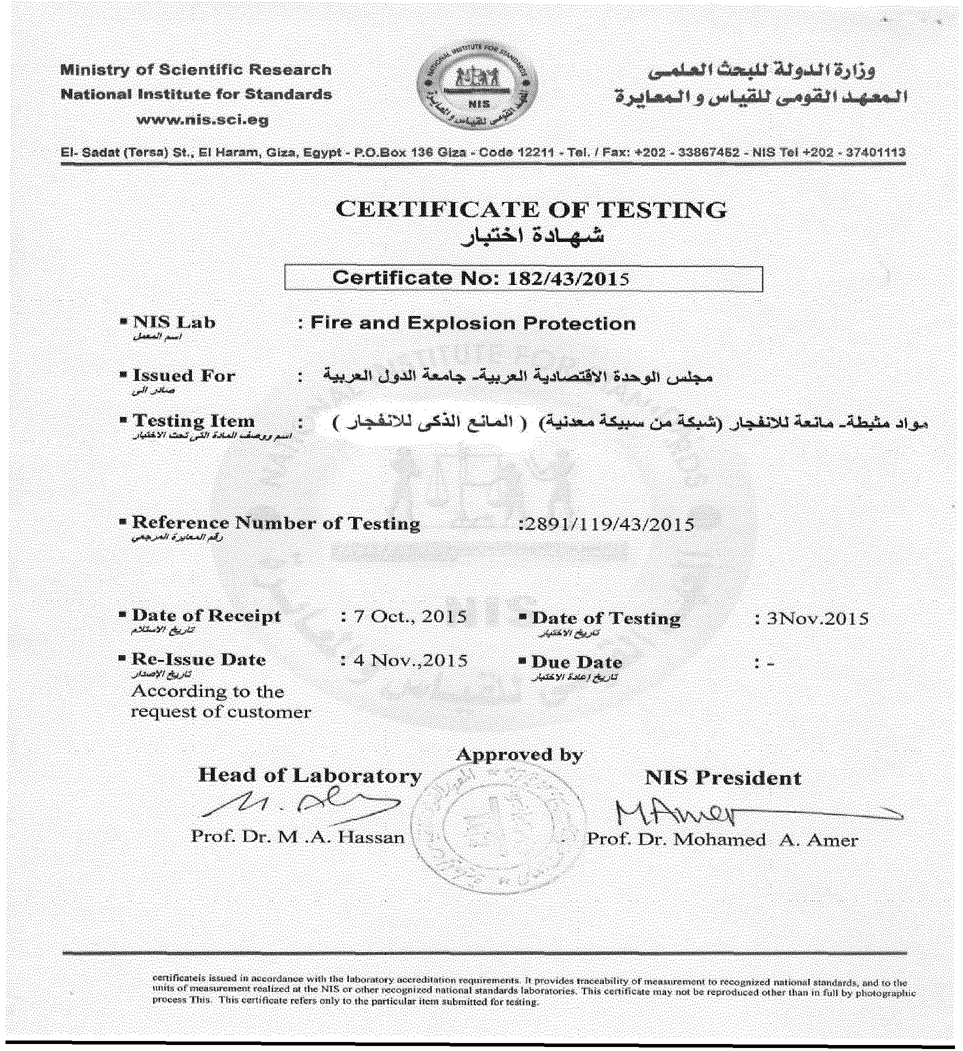

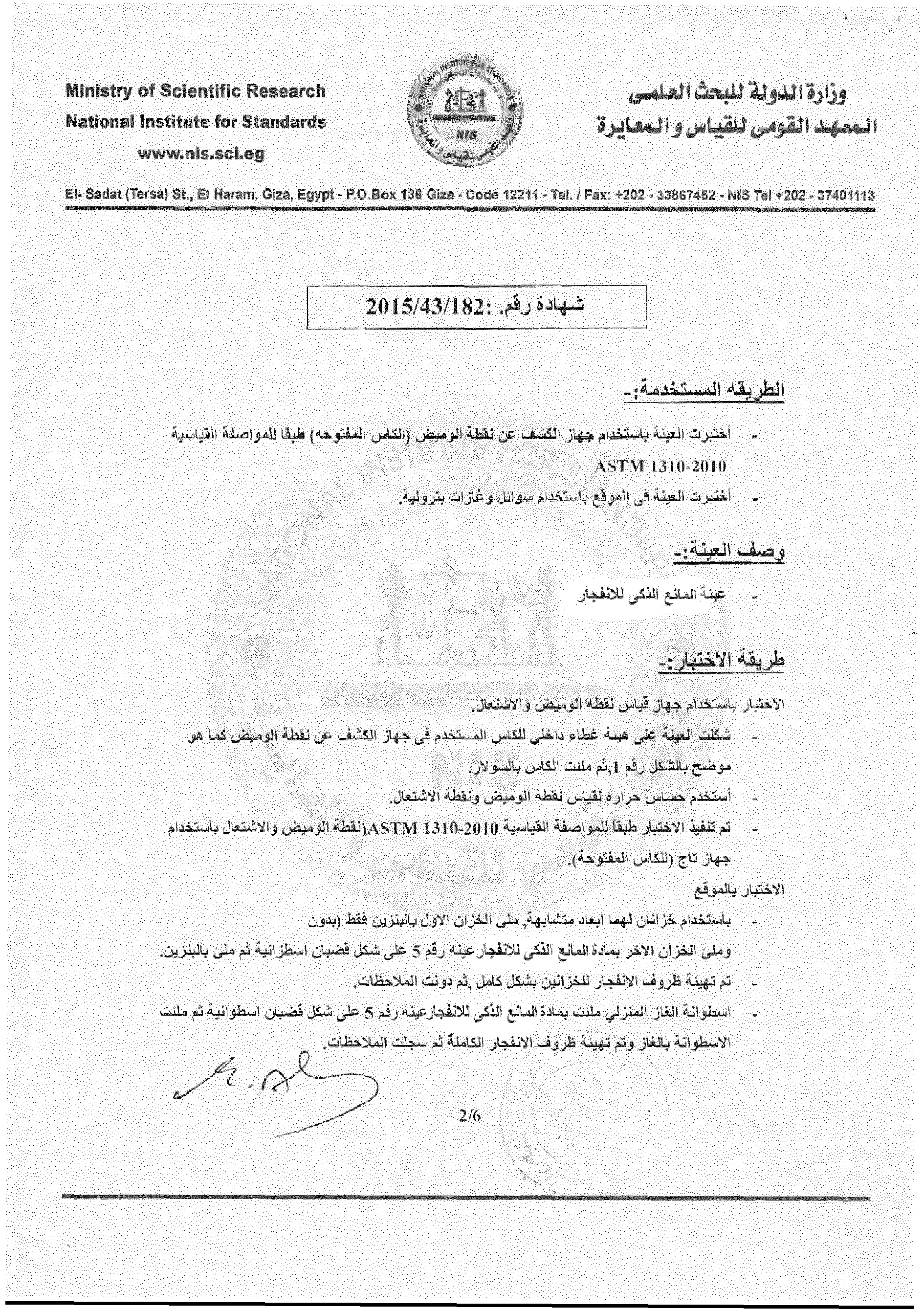

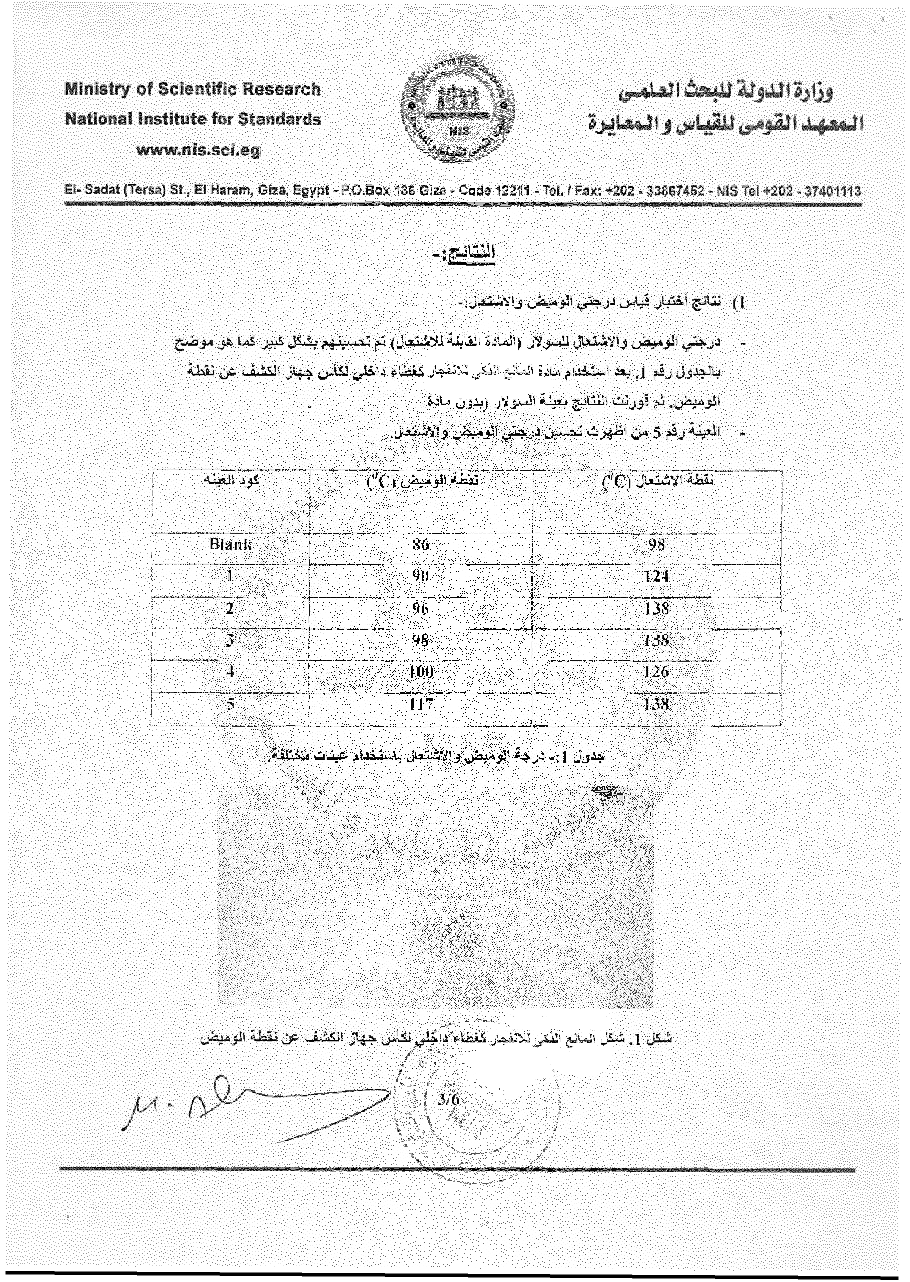

## Claims

1. **First claim:** - The smart anti-explosive material in the form of mesh sheet and geometrical shapes wherein lines the walls in the form of inner shirt, dimensions thereof is measured according to measurements, consisting of an aluminum alloy - nano-activated carbon or nano-graphene - high-purity silicon - magnesium and chromium - Sodium poly acrylate.

2. **Second claim:** - According to claim (1), wherein the smart anti-explosive material is formed in the form of hexagonal hollow mesh sheet, the thickness thereof is from 0.25mm to 0.50mm.

3. **Third claim:** - According to claim (1), wherein the smart anti-explosive material is consisting of an aluminum alloy of purity (99%)- nano-activated carbon by ratio 2% or nano-graphene by ratio 1.5% - high-purity silicon by ratio 2% - magnesium by ratio 0.5% - and chromium by ratio 0.25%, and the presence, individually, of Sodium polyacrylate.

4. **Forth claim:** - According to claim (1), the geometric shapes represent a cylindrical shape of dimensions: 2 cm to 4 cm in length, the inner diameter is from 0.6 cm to 1 cm, and the hexagonal hole scale for the mesh sheet is from 0.6 mm to 1.5 mm.
